# EUROPÄISCHE PATENTSCHRIFT

(11) **EP 3 250 485 B1**
(45) Veröffentlichungstag und Bekanntmachung des Hinweises auf die Patenterteilung: **15.11.2023**
(21) Anmeldenummer: 16700396.1
(22) Anmeldetag: 07.01.2016
(51) Int. Cl.: B65G 17/20, B65G 19/02, B65G 47/38, B65G 9/00

(54) **VERFAHREN ZUM ENTLEEREN DER TASCHEN EINER TRANSPORTVORRICHTUNG IN FORM EINES HÄNGEFÖRDERERS SOWIE VORRICHTUNG ZUR DURCHFÜHRUNG DES VERFAHRENS**
METHOD FOR EMPTYING THE POCKETS OF A TRANSPORT DEVICE IN THE FORM OF A SUSPENSION CONVEYOR, AND DEVICE FOR CARRYING OUT SAID METHOD
PROCÉDÉ POUR VIDER LES POCHES D'UN DISPOSITIF DE TRANSPORT SOUS LA FORME DE CONVOYEUR AÉRIEN ET DISPOSITIF POUR METTRE LEDIT PROCÉDÉ EN OEUVRE

(30) Priorität: 26.01.2015 CH 892015; 27.04.2015 CH 5732015
(43) Veröffentlichungstag der Anmeldung: 06.12.2017
(73) Patentinhaber: Ferag AG, 8340 Hinwil (CH)
(72) Erfinder: FENILE, Roberto, 8623 Wetzikon (CH); BENZ, Marc-Andreas, 8493 Saland (CH)
(74) Vertreter: Rentsch Partner AG
(86) Internationale Anmeldenummer: PCT/EP2016/050161
(87) Internationale Veröffentlichungsnummer: WO 2016/120032

(56) Entgegenhaltungen:
- EP-A1- 1 420 106
- DE-A1- 2 221 318
- DE-A1-102008 026 720
- DE-A1-102011 101 987
- DE-A1-102012 018 925
- DE-A1-102012 108 757
- DE-A1-102013 205 172
- GB-A- 733 714

## Beschreibung

### TECHNISCHES GEBIET

Die vorliegende Erfindung bezieht sich auf das Gebiet der Fördertechnik. Sie betrifft ein Verfahren zum Entleeren der Taschen einer Transportvorrichtung in Form eines Hängeförderers.

Sie betrifft weiterhin eine Vorrichtung zur Durchführung des Verfahrens.

### STAND DER TECHNIK

Im Stand der Technik ist eine Vielzahl von Hängeförderern bekannt, bei denen das zu fördernde Fördergut von Transporttaschen aufgenommen wird, die vergleichsweise aufwändig ausgebildet sind und mit aufwändigen Öffnungs- und Verschlussmechanismen ausgestattet sind, die gerade bei einer grösseren Förderanlage mit vielen einzelnen Taschen einerseits einen erheblichen Mehraufwand bei der Errichtung einer neuen Anlage zur Folge haben und andererseits im Dauerbetrieb eine erhöhte Anfälligkeit für Fehlfunktionen oder einen vollständigen Funktionsausfall haben.

Die Druckschrift DE 10 2008 061 685 A1 offenbart eine Belade-Station für in einer Hänge-Förder-Anlage transportierte Transport-Taschen, mit einer oberen Zuführ-Schiene für die Transport-Taschen, mit einem sich an die Zuführ-Schiene anschließenden Senkrecht-Förderer zum Zuführen der Transport-Taschen in eine untere Belade-Position, mit einer Einrichtung zum Öffnen der Transport-Taschen in der Belade-Position und mit einer sich an den Senkrecht-Förderer anschließenden unteren Abführ-Schiene zum Abführen der Transport-Taschen aus der Belade-Position.

Die Druckschrift DE 10 2008 026 720 A1 beschreibt eine Transport-Tasche mit einer Trage-Wand, die an ihrem oberen Bereich mit einer Trage-Kupplung und einem schwenkbaren Bügel, an ihrem unteren Bereich mit mindestens einer Kupplung, an ihrem oberen Bereich mit Mitteln zum Öffnen der Kupplung und mit Mitteln zum Schließen der Kupplung versehen ist und mit einer zumindest im unteren Bereich flexiblen Boden-Seiten-Wand, die in ihrem oberen Bereich mit dem schwenkbaren Bügel verbunden ist und in ihrem unteren Bereich mit Gegen-Kupplungs-Mitteln zur Aufnahme in der mindestens einen Kupplung versehen ist.

Die Druckschrift DE 10 2011 101 987 A1 offenbart eine Transporttasche zur Beförderung eines Fördergutes in einer Förderanlage, insbesondere einer Hängeförderanlage, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel eine Verschlussklappe aufweist, die eine Handhabungslasche mit einem Klemmabschnitt aufweist, wobei das Trägerteil eine Klemmeinrichtung mit einem Klemmhebel aufweist, der zwischen einer Haltestellung, in der eine Haltekraft auf den Klemmabschnitt einwirkt, und einer Freigabestellung verlagerbar ist, und wobei der Klemmhebel in der Haltestellung derart mit dem Klemmabschnitt gekoppelt ist, dass das aufgenommene Fördergut durch sein Gewicht eine Erhöhung der Haltekraft bewirkt.

Die Druckschrift DE 10 2012 108 757 A1 betrifft eine Tragetasche für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden. Der Taschenbeutel weist einen ersten und einen zweiten Beutelabschnitt auf, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung versehen ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann.

Die Druckschrift DE 10 2013 205 172 A1 offenbart eine Transporttasche zum hängenden Transport von Waren. Die Transporttasche hat eine steife Tragwand, die in ihrem in Transportstellung oberen Abschnitt mit einem Tragelement zum hängenden Tragen der Transporttasche verbunden ist. Eine flexible Waren-Haltewand bildet mit der Tragwand eine zumindest in der Transportstellung der Transporttasche nach unten und zu zwei gegenüberliegenden Seiten hin geschlossene Tragtasche. Die Tragwand ist mit der Haltewand zwischen einem in der Transportstellung oberen Wand-Verbindungsabschnitt und einem in der Transportstellung unteren Wand-Verbindungsabschnitt derart verbunden, dass eine Länge der bahnförmigen Haltewand zwischen den beiden Wand-Verbindungsabschnitten variabel an den Transport verschiedener Waren angepasst werden. Die Ausführung der Transporttasche ist derart, dass diese Längenanpassung der Haltewand durch eine Relativverlagerung der Haltewand zur Tragwand zumindest im Bereich eines der beiden Verbindungsabschnitte erfolgt.

Transporttasche ist derart, dass diese Längenanpassung der Haltewand durch eine Relativverlagerung der Haltewand zur Tragwand zumindest im Bereich eines der beiden Verbindungsabschnitte erfolgt.

Die Druckschrift DE 10 2008 026720 A1 offenbart ein Verfahren zum Entleeren der Taschen einer Transportvorrichtung in Form eines Hängeförderers, welche Transportvorrichtung einen oder mehrere Laufwagen umfasst, die an einer Laufschiene in Laufschienenrichtung beweglich gelagert sind und an denen jeweils nach unten hängend eine seitlich offene Tasche zur Aufnahme von Transportgut angeordnet ist, wobei die Tasche wenigstens eine, im geöffneten Zustand ebene, flexible Materialbahn umfasst, welche im geschlossenen Zustand eine nach unten hängende Tragschlaufe bzw. Transportschlaufe ausbildet, und wobei die Materialbahn an wenigstens einem Ende der Materialbahn lösbar mit einer Trage-Wand der Tasche befestigt ist, wobei das Verfahren folgende Schritte umfasst: (a) Heranführen einer Tasche im geschlossenen Zustand, (b) Öffnen der Tasche durch Lösen der Befestigung des wenigstens einen Endes der Materialbahn mittels einer ersten Vorrichtung zum automatischen Öffnen der Tasche, (c) Entleeren eines Transportgutes aus der geöffneten Tasche, (d) Schliessen der Tasche mittels einer zweiten Vorrichtung zum automatischen Schliessen der Tasche durch Befestigen des wenigstens einen Endes der Materialbahn, und (e) Wegführen der entleerten und geschlossenen Tasche.

Die Druckschrift DE 10 2008 026720 A1 offenbart zudem eine Vorrichtung zur Durchführung des oben genannten Verfahrens umfassend eine Entleerungsvorrichtung und eine Transportvorrichtung in Form eines Hängeförderers, welche Transportvorrichtung einen oder mehrere Laufwagen umfasst, die an einer Laufschiene in Laufschienenrichtung beweglich gelagert sind und an denen jeweils nach unten hängend eine seitlich offene Tasche zur Aufnahme von Transportgut angeordnet ist, wobei die Tasche wenigstens eine, im geöffneten Zustand ebene, flexible Materialbahn umfasst, welche im geschlossenen Zustand eine nach unten hängende Tragschlaufe bzw. Transportschlaufe ausbildet, und wobei die Materialbahn an wenigstens einem Ende der Materialbahn lösbar mit einer Trage-Wand der Tasche befestigt ist, wobei die Entleerungsvorrichtung eine erste Vorrichtung zum automatischen Öffnen und eine zweite Vorrichtung zum automatischen Schliessen der Tasche umfasst.

In einer am 26. Januar 2015 hinterlegten Schweizerischen Patentanmeldung CH 00089/15 ist eine neuartige Transportvorrichtung beschrieben worden, bei der aus einer Materialbahn durch Aufhängen an beiden Enden unter Ausbildung einer Schlaufe seitlich offene Taschen gebildet werden, die an einem Laufwagen hängend an Laufschienen verfahren werden können. Die Taschen werden durch Aushängen des einen Endes der Materialbahn geöffnet und durch entsprechendes Einhängen wieder geschlossen.

### DARSTELLUNG DER ERFINDUNG

Es ist nun Aufgabe der Erfindung, ein Verfahren zum automatischen Entleeren solcher Taschen anzugeben und eine entsprechende Vorrichtung zur Durchführung des Verfahrens zu schaffen.

Diese Aufgabe wird durch das Verfahren des Anspruchs 1 und durch die Vorrichtung des Anspruchs 7 gelöst.

Das erfindungsgemässe Verfahren ist vorgesehen zum Entleeren der Taschen einer Transportvorrichtung in Form eines Hängeförderers, welche Transportvorrichtung einen oder mehrere Laufwagen umfasst, die an einer Laufschiene in Laufschienenrichtung beweglich gelagert sind und an denen jeweils nach unten hängend eine seitlich offene Tasche zur Aufnahme vor Transportgut angeordnet ist, wobei die Tasche durch wenigstens eine, im geöffneten Zustand ebene, flexible Materialbahn gebildet wird, welche mit den beiden Enden unter Ausbildung einer nach unten hängenden Tragschlaufe bzw. Transportschlaufe am Laufwagen befestigt ist, und wobei die Befestigung der Materialbahn am Laufwagen an wenigstens einem Ende der Materialbahn lösbar ausgebildet ist.

Das erfindungsgemässe Verfahren umfasst die Schritte: (a) Heranführen einer Tasche im geschlossenen Zustand, (b) Öffnen der Tasche durch Lösen der Befestigung des wenigstens einen Endes der Materialbahn am Laufwagen mittels einer ersten Vorrichtung zum automatischen Öffnen und Schliessen der Tasche, sowie einer zweiten Vorrichtung zum Aufklappen der geöffneten Tasche, (c) Entleeren eines Transportgutes aus der geöffneten Tasche, (d) Schliessen der Tasche mittels der ersten Vorrichtung zum automatischen Öffnen und Schliessen der Tasche durch Befestigen des wenigstens einen Endes der Materialbahn am Laufwagen, und (e) Wegführen der entleerten und geschlossenen Tasche.

Eine Ausgestaltung des Verfahrens nach der Erfindung ist dadurch gekennzeichnet, dass das Heranführen der Tasche über dieselbe Laufschiene erfolgt, wie das Wegführen der entleerten und geschlossenen Tasche.

Insbesondere ist das wenigstens eine Ende der Materialbahn durch Einhaken des einen Endes am Laufwagen lösbar ausgebildet, wobei die zu leerende Tasche an einer an der Laufschiene angeordneten Entleerungsvorrichtung angehalten wird, im Schritt (b) das wenigstens eine Ende der Materialbahn ausgehakt wird, und im Schritt (d) das wenigstens eine Ende der Materialbahn wieder eingehakt wird.

Dabei wird insbesondere nach dem Aushaken der Materialbahn der ausgehakte Teil der Materialbahn auf einer Saugfläche mittels Unterdruck fixiert, und die fixierte Materialbahn zum Entleeren der Tasche mit der Saugfläche um eine Schwenkachse soweit in eine abwärts gerichtete Schrägstellung verschwenkt, dass das in der Tasche befindliche Transportgut nach unten aus der Tasche herausrutscht.

Darüber hinaus kann am wenigstens einen Ende der Materialbahn ein Griffelement angeordnet sein, wobei zum Aus- bzw. Einhaken der Materialbahn ein an der Saugfläche angeordneter Aus- und Einhakmechanismus das wenigstens einen Ende der Materialbahn am Griffelement erfasst und anhebt bzw. absenkt.

Darüber hinaus kann auch das aus der Tasche herausrutschende Transportgut über eine Rutsche zu einer Transportvorrichtung befördert und mittels der Transportvorrichtung wegtransportiert werden.

Die erfindungsgemässe Vorrichtung nach Anspruch 7 umfasst eine erste Vorrichtung zum automatischen Öffnen und Schliessen der Tasche, sowie eine zweite Vorrichtung zum Aufklappen der geöffneten Tasche.

Eine Ausgestaltung der Vorrichtung nach der Erfindung ist dadurch gekennzeichnet, dass die erste Vorrichtung einen Aus- und Einhakmechanismus aufweist, welcher ein in vertikaler Richtung verfahrbares Eingriffselement umfasst, das mit einem an der Tasche angebrachten Griffelement in Eingriff bringbar ist.

Das Griffelement kann insbesondere stangenartig ausgebildet sein und insbesondere durch die eine Querstange der Tasche selbst gebildet werden.

Insbesondere umfasst die zweite Vorrichtung eine über einen Unterdruckanschluss mit Unterdruck versorgte Saugfläche für die ausgehakte Materialbahn, welche Saugfläche um eine Schwenkachse verschwenkbar in einem Gestell unterhalb der Laufschiene angeordnet ist.

Zusätzlich kann eine Rutsche vorgesehen sein, welche am oberen Ende an die nach unten verschwenkte Saugfläche anschliesst.

Darüber hinaus kann die Rutsche mit ihrem unteren Ende an eine Transportvorrichtung zum Wegtransportieren des entleerten Transportgutes anschliessen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer Seitenansicht ein für die vorliegende Erfindung geeignetes Beispiel einer Transportvorrichtung mit Laufschiene, Laufwagen und einer einhakbaren, eine Tasche bildenden Materialbahn im ausgehakten Zustand, wie es in der am 26. Januar 201 5 hinterlegten Schweizerischen Patentanmeldung CH 00089/1 5 offenbart ist;
- Fig. 2: in der Seitenansicht die Vorrichtung aus Fig. 1 mit eine Tasche bildender eingehakter Materialbahn und darin transportiertem Transportgut;
- Fig. 3: in einer Seitenansicht ein für die vorliegende Erfindung geeignetes weiteres Beispiel einer Transportvorrichtung mit Laufschiene, Laufwagen und einer einhakbaren, eine Tasche bildenden Materialbahn im eingehakten Zustand, wie es in der Patentanmeldung am 26. Januar 201 5 hinterlegten Schweizerischen Patentanmeldung CH 00089/1 5 offenbart ist;
- Fig. 4: die Vorrichtung aus Fig. 3 in Laufrichtung gesehen; und
- Fig. 5a-h: ein Ausführungsbeispiel einer Vorrichtung nach der Erfindung mit verschiedenen Schritten bei der Entleerung an einer Laufschiene vorbeigeführten Taschen der in Fig. 3 und 4 gezeigten Art.

### WEGE ZUR AUSFÜHRUNG DER ERFINDUNG

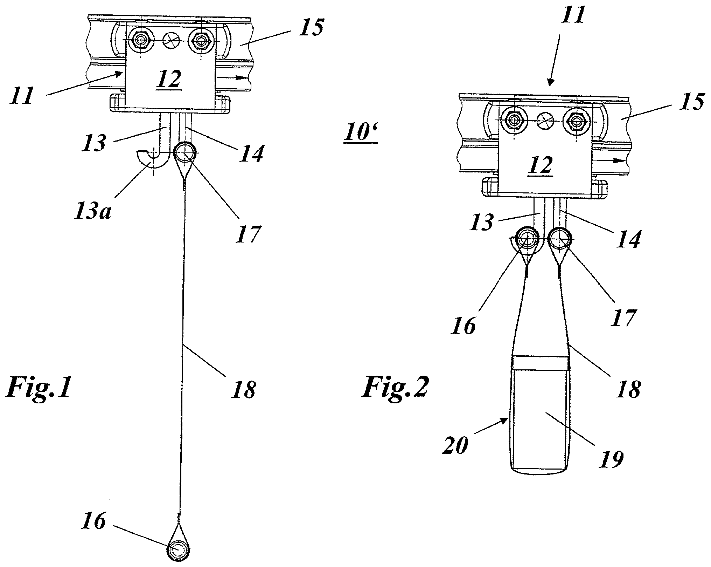

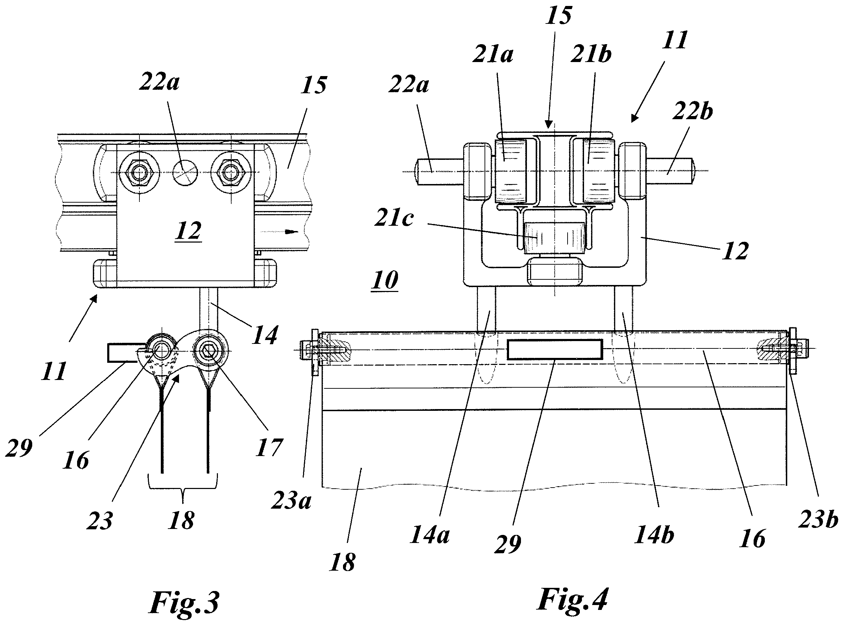

Die Transportvorrichtung 10' der Fig. 1 und 2 umfasst eine sich in einer Förderrichtung (Pfeil in Fig. 1) erstreckende, im Beispiel der Fig. 1 horizontal verlaufende, Laufschiene 15, die im gezeigten Beispiel aus einem mehrfach gebogenen Blechstreifen symmetrisch zu einer vertikalen Mittelebene hergestellt ist und zwei gegenüberliegende Tragschienen und eine unten in der Mitte ausgebildete Führungsschiene mit rechteckigem Profil aufweist. An der Laufschiene 15 hängend ist ein Laufwagen 11 in Schienenrichtung beweglich geführt. Der Laufwagen 11 hat einen U-förmigen Wagenkörper 12 (siehe Fig. 4), der an beiden Schenkeln jeweils ein Paar von tragenden Laufrollen 21a und 21b und im unteren Bereich führende Laufrollen 21c trägt, mit denen er in die Laufschiene 15 seitlich und von unten eingreift.

Zwischen den seitlichen Laufrollenpaaren 21a und 21b ist jeweils ein seitlich nach aussen abstehender Mitnehmer 22a und 22b am Wagenkörper 12 angebracht, der den Wagen bei Bedarf in Eingriff mit einer Antriebsvorrichtung, einer Bremsvorrichtung, einer Schaltvorrichtung oder dgl. bringen kann. Vom unteren Boden des U-förmigen Wagenkörpers 12 stehen senkrecht nach unten ein Paar von quer zur Schienenrichtung beabstandeten Befestigungselementen 14 bzw. 14a,b (Fig. 4) und ein Paar von in Laufrichtung dahinter angeordneten Tragelementen 13 ab.

Die beiden stangenförmigen Befestigungselemente 14 bzw. 14a,b sind am unteren Ende fest mit einer sich horizontal und quer und symmetrisch zur Schienenrichtung erstreckenden ersten Querstange 17 verbunden. Die Tragelemente 13 mit dem zugehörigen Haken 13a nehmen eine parallel zur ersten Querstange 17 angeordnete zweite Querstange 16 auf, die gewissermassen in die Haken 13a "eingehakt" und wieder herausgenommen oder ausgehakt werden kann.

Jede der beiden Querstangen 16 und 17 steckt in einer zugehörigen endseitig ausgebildeten, vernähten Schlaufe der Tasche 20 einer rechteckigen Materialbahn 18, die eine vorgegebene Breite und Länge aufweist. Im ausgehängten Zustand (Fig. 1) hängt die Materialbahn 18 nur über die Querstange 17 am Laufwagen 11 und mit der freien Querstange 16 senkrecht nach unten und hat so die Form einer ebenen Bahn. Im eingehängten Zustand (Fig. 2), bei dem die Querstange 16 in die hakenförmigen Tragelemente 13 eingehängt ist, bildet die Materialbahn 18 eine seitlich offene Trag- oder Transportschlaufe bzw. Tasche 20, in die ein zu förderndes Transportgut 19, z.B. ein Paket, Päckchen oder dgl., eingelegt sein kann.

Das Ausführungsbeispiel der Fig. 3 und 4, welches eine Transportvorrichtung 10 zeigt, unterscheidet sich vom Ausführungsbeispiel der Fig. 1 und 2 (Transportvorrichtung 10') dadurch, dass auf die am Wagenkörper 12 angebrachten hakenförmigen Tragelemente 13 ganz verzichtet wird und stattdessen zur Aufnahme der Querstange 16 Haken 23 bzw. 23a,b an den äusseren Enden der Querstange 17 angebracht sind.

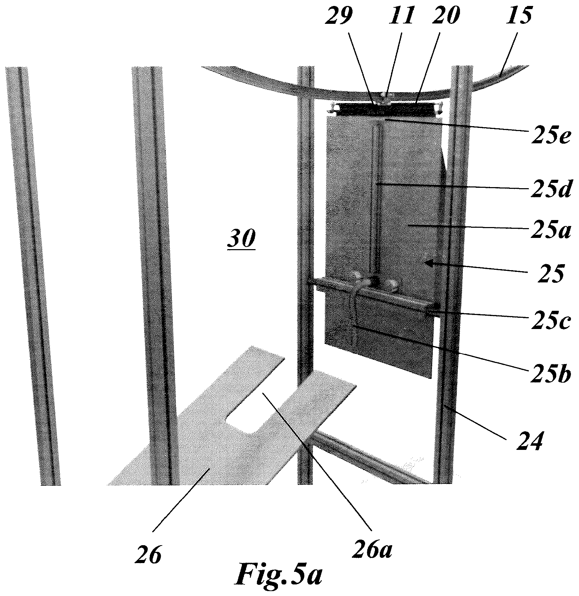

Von diesem Ausführungsbeispiel einer Transportvorrichtung ausgehend soll nachfolgend am Ausführungsbeispiel einer Entleerungsvorrichtung die vorliegende Erfindung näher erläutert werden. Die Fig. 5a-h zeigen dabei verschiedene Momentaufnahmen aus einer Animation, welche einen Entleerungsvorgang mit dieser Entleerungsvorrichtung schematisch und stark vereinfacht wiedergibt.

Die Entleerungsvorrichtung 30 ist in einem Gestell 24 unterhalb der (durchgehenden) Laufschiene 15 angebracht (Fig. 5a). Die Entleerungsvorrichtung 30 umfasst eine Aufklappvorrichtung 25, die ihrerseits eine um eine Schwenkachse schwenkbar im Gestell 24 gelagerte (z.B. plattenförmige) Saugfläche 25a aufweist, die über einen Unterdruckanschluss 25b auf der Rückseite mit dem notwendigen Unterdruck versorgt wird. Die Saugfläche 25a ist im Ruhezustand vertikal ausgerichtet, so dass eine an der Laufschiene 15 mit ihrem Laufwagen 11 herangeführte Tasche 20 gegen die Saugfläche 25a fährt und gestoppt wird (Fig. 5a). Ein an der aushakbaren Seite der Tasche 20 angeordnetes Griffelement 29 kann in dieser Position vom vertikal verfahrbaren Eingriffselement 25e eines auf der Rückseite der Saugfläche 25a angeordneten Aus- und Einhakmechanismus 25d erfasst und angehoben werden, um die lösbare Seite der Tasche auszuhaken.

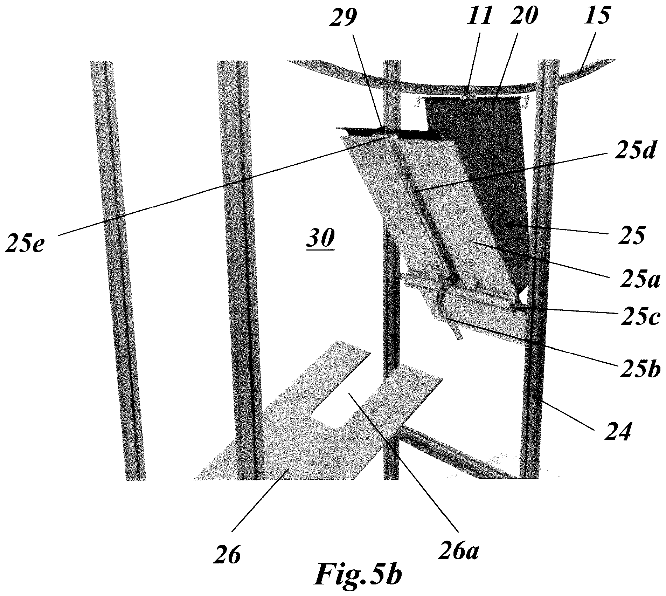

Ist diese Seite ausgehakt, wird der damit zusammenhängende Teil der Materialbahn 18 durch Unterdruck an der Saugfläche 25a fixiert und die Saugfläche 25a mit der fixierten Materialbahn nach aussen und unten verschwenkt (Fig. 5b), wodurch die Tasche 20 ein Stückweit geöffnet wird.

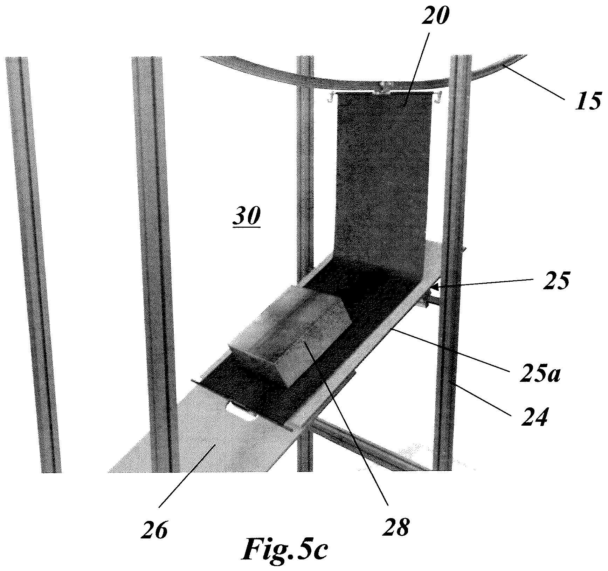

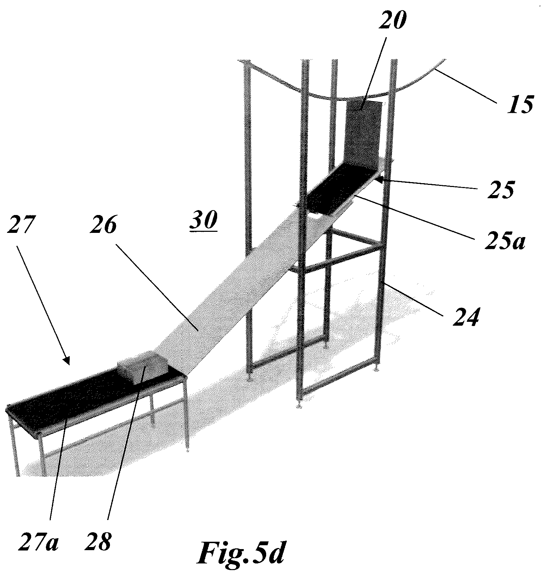

Durch Verschwenken der Saugfläche 25a weit über 90° hinaus (Fig. 5c) kommt die Saugfläche in einer Endposition schräg nach unten zeigend auf dem oberen Ende einer schräg nachunten führenden Rutsche 26 zu liegen, so dass ein in der Tasche 20 befindliches Paket 28 oder dgl. aufgrund der Schwerkraft aus der Tasche 20 heraus und über die Rutsche 26 nach unten rutscht (Fig. 5d).

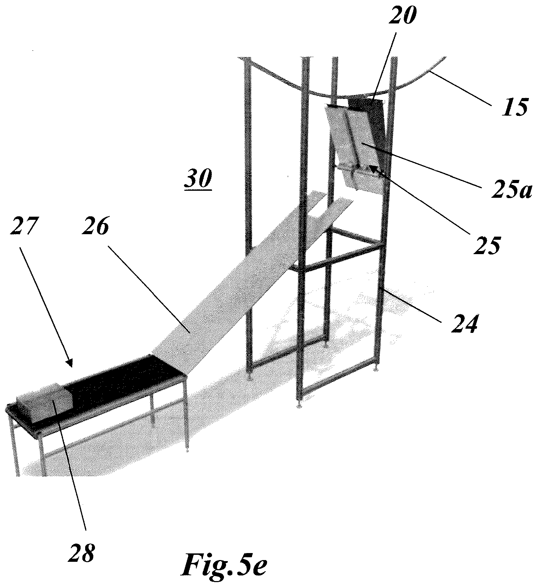

Das untere Ende der Rutsche 26 schliesst an eine horizontale Transportvorrichtung 27 an, die z.B. mittels eines angetriebenen Transportbandes 27a das Paket 28 weitertransportiert (Fig. 5e).

Gleichzeitig schwenkt die Saugfläche 25a der Aufklappvorrichtung 25 mit dem angesaugten Teil der Materialbahn 18 wieder in die Ausgangsstellung zurück (Fig. 5e), in der das ausgehakte Ende der Tasche 20 mittels des Aus- und Einhakmechanismus wieder eingehakt werden kann. Der Unterdruck wird dann durch einen Druckausgleich beseitigt.

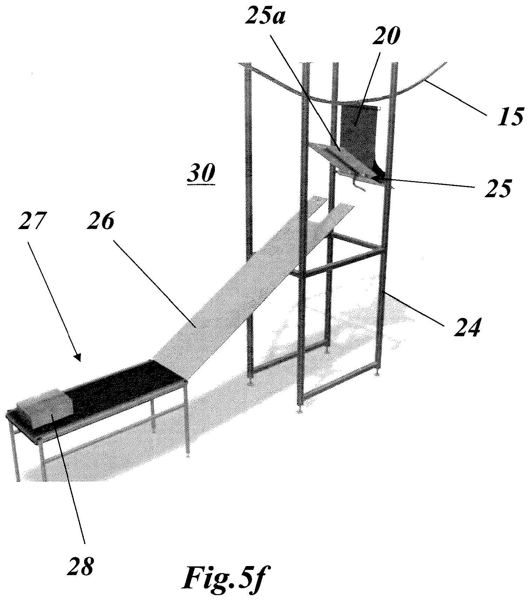

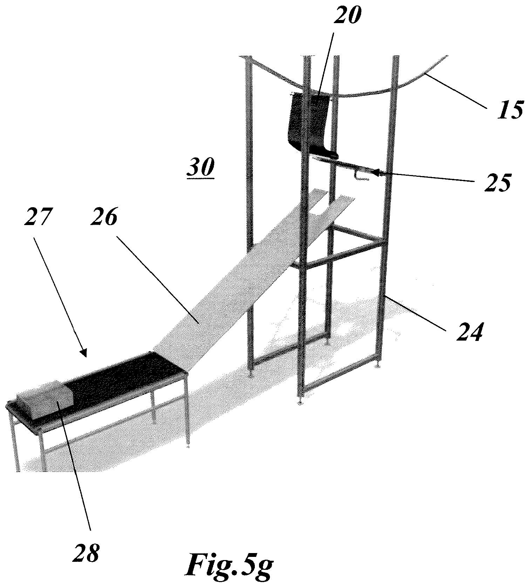

Ist dies geschehen, wird die Saugfläche der Aufklappvorrichtung 25 erneut verschwenkt (Fig. 5f), jedoch nur soweit, dass die wieder geschlossene Tasche 20 an der Laufschiene 15 über die Aufklappvorrichtung 25 hinweg sicher weitertransportiert werden kann (Fig. 5g).

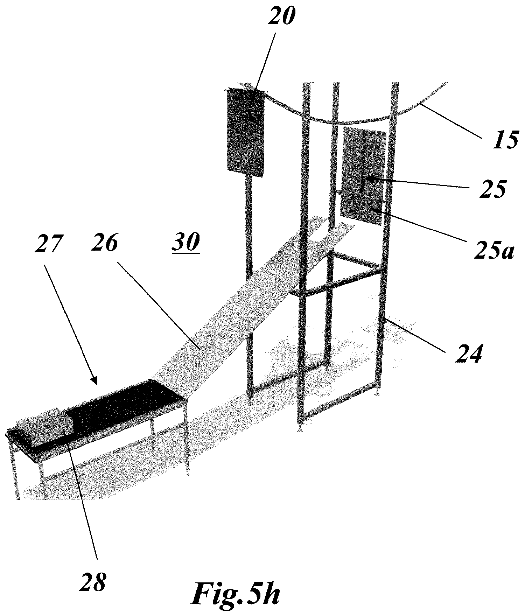

Zu guter Letzt kann die Aufklappvorrichtung 25 wieder in ihre Ausgangsstellung zurückgeklappt werden (Fig. 5h) und ist so für einen neuen Entleerungsvorgang bereit.

## Patentansprüche

1. Verfahren zum Entleeren der Taschen (20) einer Transportvorrichtung (10) in Form eines Hängeförderers, welche Transportvorrichtung (10) einen oder mehrere Laufwagen (11) umfasst, die an einer Laufschiene (15) in Laufschienenrichtung beweglich gelagert sind und an denen jeweils nach unten hängend eine seitlich offene Tasche (20) zur Aufnahme von Transportgut (28) angeordnet ist, wobei die Tasche (20) durch wenigstens eine, im geöffneten Zustand ebene, flexible Materialbahn (18) gebildet wird, welche mit den beiden Enden unter Ausbildung einer nach unten hängenden Tragschlaufe bzw. Transportschlaufe am Laufwagen (11) befestigt ist, und wobei die Befestigung der Materialbahn (18) am Laufwagen (11) an wenigstens einem Ende (16) der Materialbahn (18) lösbar ausgebildet ist, wobei das Verfahren folgende Schritte umfasst:
(a) Heranführen einer Tasche (20) im geschlossenen Zustand, (b) Öffnen der Tasche (20) durch Lösen der Befestigung des wenigstens einen Endes (16) der Materialbahn (18) am Laufwagen (11) mittels einer ersten Vorrichtung (25d) zum automatischen Öffnen und Schliessen der Tasche (20), sowie einer zweiten Vorrichtung (25) zum Aufklappen der geöffneten Tasche (20), (c) Entleeren eines Transportgutes (28) aus der geöffneten Tasche (20), (d) Schliessen der Tasche (20) mittels der ersten Vorrichtung (25d) zum automatischen Öffnen und Schliessen der Tasche (20) durch Befestigen des wenigstens einen Endes (16) der Materialbahn (18) am Laufwagen (11), und (e) Wegführen der entleerten und geschlossenen Tasche (20).

2. Verfahren nach Anspruch 1, **dadurch gekennzeichnet, dass** das Heranführen der Tasche (20) über dieselbe Laufschiene (15) erfolgt, wie das Wegführen der entleerten und geschlossenen Tasche (20).

3. Verfahren nach Anspruch 2, **dadurch gekennzeichnet, dass** das wenigstens eine Ende (16) der Materialbahn (18) durch Einhaken des einen Endes (16) am Laufwagen (11) lösbar ausgebildet ist, dass die zu leerende Tasche (20) an einer an der Laufschiene (15) angeordneten Entleerungsvorrichtung (30) angehalten wird, dass im Schritt (b) das wenigstens eine Ende der Materialbahn (18) ausgehakt wird, und dass im Schritt (d) das wenigstens eine Ende (16) der Materialbahn (18) wieder eingehakt wird.

4. Verfahren nach Anspruch 3, **dadurch gekennzeichnet, dass** nach dem Aushaken der Materialbahn (18) der ausgehakte Teil der Materialbahn (18) auf einer Saugfläche (25a) mittels Unterdruck fixiert wird, und dass die fixierte Materialbahn zum Entleeren der Tasche (20) mit der Saugfläche (25a) um eine Schwenkachse (25c) soweit in eine abwärts gerichtete Schrägstellung verschwenkt wird, dass das in der Tasche befindliche Transportgut (28) nach unten aus der Tasche herausrutscht.

5. Verfahren nach Anspruch 4, **dadurch gekennzeichnet, dass** am wenigstens einen Ende (16) der Materialbahn (18) ein Griffelement (29) angeordnet ist, und dass zum Aus- bzw. Einhaken der Materialbahn (18) ein an der Saugfläche (25a) angeordneter Aus- und Einhakmechanismus (25d) das wenigstens einen Ende (16) der Materialbahn (18) am Griffelement (29) erfasst und anhebt bzw. absenkt.

6. Verfahren nach Anspruch 4, **dadurch gekennzeichnet, dass** das aus der Tasche (20) herausrutschende Transportgut (28) über eine Rutsche (26) zu einer Transportvorrichtung (27, 27a) befördert und mittels der Transportvorrichtung (27, 27a) wegtransportiert wird.

7. Vorrichtung zur Durchführung des Verfahrens nach einem der Ansprüche 1 bis 6, in Form einer Entleerungsvorrichtung (30) und einer Transportvorrichtung (10) in Form eines Hängeförderers, welche Transportvorrichtung (10) einen oder mehrere Laufwagen (11) umfasst, die an einer Laufschiene (15) in Laufschienenrichtung beweglich gelagert sind und an denen jeweils nach unten hängend eine seitlich offene Tasche (20) zur Aufnahme von Transportgut (28) angeordnet ist, wobei die Tasche (20) durch wenigstens eine, im geöffneten Zustand ebene, flexible Materialbahn (18) gebildet wird, welche mit den beiden Enden unter Ausbildung einer nach unten hängenden Tragschlaufe bzw. Transportschlaufe am Laufwagen (11) befestigt ist, und wobei die Befestigung der Materialbahn (18) am Laufwagen (11) an wenigstens einem Ende (16) der Materialbahn (18) lösbar ausgebildet ist, wobei die Entleerungsvorrichtung (30) eine erste Vorrichtung (25d) zum automatischen Öffnen und Schliessen der Tasche (20), sowie eine zweite Vorrichtung (25) zum Aufklappen der geöffneten Tasche (20) umfasst.

8. Vorrichtung nach Anspruch 7, **dadurch gekennzeichnet, dass** die erste Vorrichtung einen Aus- und Einhakmechanismus (25d) aufweist, welcher ein in vertikaler Richtung verfahrbares Eingriffselement (25e) umfasst, das mit einem an der Tasche (20) angebrachten Griffelement (29) in Eingriff bringbar ist.

9. Vorrichtung nach Anspruch 8, **dadurch gekennzeichnet, dass** die zweite Vorrichtung (25) eine über einen Unterdruckanschluss (25b) mit Unterdruck versorgte Saugfläche (25a) für die ausgehakte Materialbahn (18) umfasst, welche Saugfläche (25a) um eine Schwenkachse (25c) verschwenkbar in einem Gestell (24) unterhalb der Laufschiene (15) angeordnet ist.

10. Vorrichtung nach Anspruch 9, **dadurch gekennzeichnet, dass** eine Rutsche (26) vorgesehen ist, welche am oberen Ende an die nach unten verschwenkte Saugfläche (25a) anschliesst.

11. Vorrichtung nach Anspruch 10, **dadurch gekennzeichnet, dass** die Rutsche (26) mit ihrem unteren Ende an eine Transportvorrichtung (27) zum Wegtransportieren des entleerten Transportgutes (28) anschliesst.

## Claims

1. Method for emptying the bags (20) of a transport device (10) in the form of an overhead conveyor, said transport device (10) comprising one or a plurality of carriages (11) which are mounted on a guide rail (15) so as to be movable in the guide rail direction, and on which one laterally open bag (20) for receiving transported goods (28) is in each case disposed so as to hang downwards, wherein the bag (20) is formed by at least one flexible material web (18) which in the opened state is flat and by way of the two ends is fastened to the carriage (11) while forming a carrying strap or transport strap, respectively, that hangs downwards, and wherein the fastening of the material web (18) to the carriage (11) on at least one end (16) of the material web (18) is configured to be releasable, wherein the method comprises the following steps:
a) advancing a bag (20) in the closed state;
b) opening the bag (20) by releasing the fastening of the at least one end (16) of the material web (18) on the carriage (11) by means of a first device (25d) for automatically opening and closing the bag (20) and a second device (25) for flipping open the opened bag (20);
c) emptying an item of transported goods (28) from the opened bag (20);
d) closing the bag (20) by means of the first device (25d) for automatically opening and closing the bag (20) by fastening the at least one end (16) of the material web (18) to the carriage (11); and
e) moving away the emptied and closed bag (20).

2. Method according to Claim 1, **characterized in that** the advancement of the bag (20) is performed by way of the same guide rail (15) as the moving away of the emptied and closed bag (20).

3. Method according to Claim 2, **characterized in that** the at least one end (16) of the material web (18) is configured so as to be releasable by hooking-in the one end (16) on the carriage (11); **in that** the bag (20) to be emptied is stopped at an emptying device (30) disposed on the guide rail (15); **in that** in step b) the at least one end of the material web (18) is unhooked; and **in that** in step d) the at least one end (16) of the material web (18) is hooked in again.

4. Method according to Claim 3, **characterized in that**, after unhooking the material web (18), the unhooked part of the material web (18) is fixed on a suction face (25a) by means of a negative pressure; and **in that** the fixed material web, conjointly with the suction face (25a), for emptying the bag (20) is pivoted about a pivot axis (25c) to a downwards-oriented oblique position until the item of transported goods (28) located in the bag slides downwards out of the bag.

5. Method according to Claim 4, **characterized in that** a gripping element (29) is disposed on the at least one end (16) of the material web (18); and **in that** for unhooking or hooking-in the material web (18) an unhooking and hooking-in mechanism (25d) disposed on the suction face (25a) acquires and lifts or lowers the at least one end (16) of the material web (18) at the gripping element (29), respectively.

6. Method according to Claim 4, **characterized in that** the item of transported goods (28) sliding out of the bag (20) by way of a chute (26) is conveyed to a transport device (27, 27a) and transported away by means of the transport device (27, 27a).

7. Device for carrying out the method according to one of Claims 1 to 6, in form of an emptying device (30) and a transport device (10) in the form of an overhead conveyor, said transport device (10) comprising one or a plurality of carriages (11) which are mounted on a guide rail (15) so as to be movable in the guide rail direction and on which a laterally open bag (20) for receiving transported goods (28) is in each case disposed so as to hang downwards, wherein the bag (20) is formed by at least one flexible material web (18) which in the opened state is flat and by way of the two ends is fastened to the carriage (11) while forming a carrying strap or transport strap, respectively, that hangs downwards, and wherein the fastening of the material web (18) to the carriage (11) on at least one end (16) of the material web (18) is configured to be releasable, wherein the emptying device (30) comprises a first device (25d) for automatically opening and closing the bag (20), and a second device (25) for flipping open the opened bag (20).

8. Device according to Claim 7, **characterized in that** the first device comprises an unhooking and hooking-in mechanism (25d) which comprises an engagement element (25e) that is displaceable in the vertical direction and is able to be brought to engage with a gripping element (29) attached to the bag (20).

9. Device according to Claim 8, **characterized in that** the second device (25) for the unhooked material web (18) comprises a suction face (25a) which by way of a negative-pressure connection (25b) is supplied with a negative pressure, said suction face (25a) being disposed in a frame (24) below the guide rail (15) so as to be pivotable about a pivot axis (25c).

10. Device according to Claim 9, **characterized in that** a chute (26) which at the upper end adjoins the downwards-pivoted suction face (25a) is provided.

11. Device according to Claim 10, **characterized in that** the chute (26) by way of the lower end thereof adjoins a transport device (27) for transporting away the emptied transported goods (28).

## Revendications

1. Procédé pour vider les poches (20) d'un dispositif de transport (10) se présentant sous la forme d'un convoyeur aérien, lequel dispositif de transport (10) comprend un ou plusieurs chariots (11) qui sont montés sur un rail de roulement (15) de manière mobile dans la direction du rail de roulement et sur lesquels est disposée respectivement de manière pendante vers le bas une poche (20) ouverte latéralement et destinée à recevoir un produit à transporter (28), la poche (20) étant formée par au moins une bande de matériau (18) flexible et plate à l'état ouvert, laquelle est fixée, par les deux extrémités, au chariot (11) en formant une boucle de support ou une boucle de transport pendante vers le bas, et la fixation de la bande de matériau (18) au chariot (11) étant conçue de manière amovible à au moins une extrémité (16) de la bande de matériau (18), le procédé comprenant les étapes suivantes:
(a) approcher une poche (20) à l'état fermé, (b) ouvrir la poche (20) en détachant la fixation de l'au moins une extrémité (16) de la bande de matériau (18) au niveau du chariot (11) au moyen d'un premier dispositif (25d) servant à ouvrir et fermer automatiquement la poche (20), ainsi que d'un deuxième dispositif (25) servant à déplier la poche ouverte (20), (c) vider un produit à transporter (28) hors de la poche ouverte (20), (d) fermer la poche (20) au moyen du premier dispositif (25d) servant à ouvrir et fermer automatiquement la poche (20) par fixation de l'au moins une extrémité (16) de la bande de matériau (18) au chariot (11), et (e) enlever la poche (20) vidée et fermée.

2. Procédé selon la revendication 1, **caractérisé en ce que** l'on approche la poche (20) par le biais du même rail de roulement (15) que pour l'enlever de la poche (20) vidée et fermée.

3. Procédé selon la revendication 2, **caractérisé en ce que** l'au moins une extrémité (16) de la bande de matériau (18) est réalisée de manière détachable par accrochage de l'une des extrémités (16) au chariot (11), **en ce que** la poche (20) devant être vidée est retenue sur un dispositif de vidage (30) disposé sur le rail de roulement (15), **en ce qu'**à l'étape (b), l'au moins une extrémité de la bande de matériau (18) est décrochée et **en ce qu'**à l'étape (d), l'au moins une extrémité (16) de la bande de matériau (18) est à nouveau accrochée.

4. Procédé selon la revendication 3, **caractérisé en ce qu'**après le décrochage de la bande de matériau (18), la partie décrochée de la bande de matériau (18) est fixée sur une surface d'aspiration (25a) au moyen d'une dépression, et **en ce que** la bande de matériau fixée est, pour vider la poche (20), pivotée avec la surface d'aspiration (25a) autour d'un axe de pivotement (25c) dans une position inclinée orientée vers le bas, si bien que le produit à transporter (28) se trouvant dans la poche glisse vers le bas hors de la poche.

5. Procédé selon la revendication 4, **caractérisé en ce qu'**un élément de préhension (29) est disposé à au moins une extrémité (16) de la bande de matériau (18), et **en ce que**, pour décrocher ou accrocher la bande de matériau (18), un mécanisme de décrochage et d'accrochage (25d) disposé sur la surface d'aspiration (25a) détecte et soulève ou abaisse l'au moins une extrémité (16) de la bande de matériau (18) au niveau de l'élément de préhension (29).

6. Procédé selon la revendication 4, **caractérisé en ce que** le produit à transporter (28) glissant hors de la poche (20) est transporté par le biais d'une goulotte (26) jusqu'à un dispositif de transport (27, 27a) et est évacué au moyen du dispositif de transport (27, 27a).

7. Dispositif pour mettre en œuvre le procédé selon l'une des revendications 1 à 6, se présentant en sous forme d'un dispositif de vidage (30) et un dispositif de transport (10) se présentant sous la forme d'un convoyeur aérien, lequel dispositif de transport (10) comprend un ou plusieurs chariots (11) qui sont montés sur un rail de roulement (15) de manière mobile dans la direction du rail de roulement et sur lesquels est disposée respectivement de manière pendante vers le bas une poche (20) ouverte latéralement et destinée à recevoir un produit à transporter (28), la poche (20) étant formée par au moins une bande de matériau (18) flexible et plate à l'état ouvert, laquelle est fixée, par les deux extrémités, au chariot (11) en formant une boucle de support ou une boucle de transport pendante vers le bas, et la fixation de la bande de matériau (18) au chariot (11) étant conçue de manière amovible à au moins une extrémité (16) de la bande de matériau (18), le dispositif de vidage (30) comprenant un premier dispositif (25d) servant à ouvrir et fermer automatiquement la poche (20), ainsi qu'un deuxième dispositif (25) servant à déplier la poche ouverte (20).

8. Dispositif selon la revendication 7, **caractérisé en ce que** le premier dispositif présente un mécanisme de décrochage et d'accrochage (25d), lequel comprend un élément d'entrée en prise (25e) déplaçable dans la direction verticale, lequel peut être amené en prise avec un élément de préhension (29) attaché à la poche (20).

9. Dispositif selon la revendication 8, **caractérisé en ce que** le deuxième dispositif (25) comprend une surface d'aspiration (25a), alimentée en dépression par le biais d'un raccord à dépression (25b), pour la bande de matériau (18) décrochée, laquelle surface d'aspiration (25a) est disposée dans un bâti (24) en dessous du rail de roulement (15) de manière à pouvoir pivoter autour d'un axe de pivotement (25c).

10. Dispositif selon la revendication 9, **caractérisé en ce qu'**une goulotte (26) est prévue, laquelle se raccorde, à l'extrémité supérieure, à la surface d'aspiration (25a) pivotée vers le bas.

11. Dispositif selon la revendication 10, **caractérisé en ce que** la goulotte (26) se raccorde, par son extrémité inférieure, à un dispositif de transport (27) servant à évacuer le produit à transporter (28) vidé.
